(19) Europäisches Patentamt
European Patent Office
Office européen des brevets

(11) **EP 4 170 452 A1**

(12) **EUROPEAN PATENT APPLICATION**
published in accordance with Art. 153(4) EPC

(43) Date of publication:
**26.04.2023 Bulletin 2023/17**

(21) Application number: **21828991.6**

(22) Date of filing: **21.06.2021**

(51) International Patent Classification (IPC):
**G05D 1/02** (2020.01)       **G01C 21/34** (2006.01)
**G01C 21/20** (2006.01)

(86) International application number:
**PCT/CN2021/101206**

(87) International publication number:
**WO 2021/259192 (30.12.2021 Gazette 2021/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.06.2020 CN 202010577991**

(71) Applicant: **Jingdong Technology Information
Technology Co., Ltd.
Beijing 100176 (CN)**

(72) Inventors:
• **CAI, Xiaolong
  Beijing 100176 (CN)**
• **WANG, Chao
  Beijing 100176 (CN)**

• **YAO, Xiujun
  Beijing 100176 (CN)**
• **GUI, Chenguang
  Beijing 100176 (CN)**
• **CAI, Yucheng
  Beijing 100176 (CN)**
• **MA, Fuqiang
  Beijing 100176 (CN)**
• **LI, Zhen
  Beijing 100176 (CN)**
• **GUO, Xinran
  Beijing 100176 (CN)**
• **CUI, Lihua
  Beijing 100176 (CN)**

(74) Representative: **karo IP
karo IP Patentanwälte
Kahlhöfer Rößler Kreuels PartG mbB
Postfach 32 01 02
40416 Düsseldorf (DE)**

(54) **PATH PLANNING METHOD AND APPARATUS, ROBOT, AND STORAGE MEDIUM**

(57)      Disclosed are a path planning method and a device, a robot and a storage medium. The method includes: grading a traversable region between a starting point and an end point in a grid map, and determining cost values corresponding to regions of each level (S21); traversing the traversable region from the starting point based on the cost values of the regions of each level, and determining a plurality of target nodes conforming to a minimum value of a preset function (S22); and determining a target path of a robot based on the plurality of target nodes (S23).

grading a traversable region between a starting point and an end point in a grid map, and determining cost values corresponding to regions of each level — S21

traversing the traversable region from the starting point based on the cost values of the regions of each level, and determining a plurality of target nodes conforming to a minimum value of a preset function — S22

determining a target path of a robot based on the plurality of target nodes — S23

Fig. 2

## Description

## CROSS-REFERENCE TO RELATED APPLICATIONS

This application claims priority to Chinese Patent Application No. 202010577991.5, entitled "PATH PLANNING METHOD AND DEVICE, ROBOT AND STORAGE MEDIUM" and filed with China National Intellectual Property Administration on June 22, 2020, all contents of which are incorporated herein by reference.

## TECHNICAL FIELD

The present application relates generally to the field of robotics and more particularly to a path planning method and a device, a robot and a storage medium.

## BACKGROUND

Indoor robot navigation system is mainly composed of sensor sensing, positioning, path planning and motion control. The sensor is responsible for detecting positions of obstacles around the robot and fusing the existing map information to obtain a real-time position of the robot. After receiving a navigation instruction of a target point from an upper computer, the navigation system will plan an optimal path to reach the target point, and control the motor to follow this path to reach the target point.

The path planning algorithm uses obstacle information detected by sensors and in an existing map to find a shortest path from a starting point to the target point (the robot is regarded as a particle), and this path will not pass through obstacles, so the robot can reach the target point.

However, the robot is not a particle, and the existing path planning algorithm cannot guarantee that the edge of the robot will not collide with obstacles. Therefore, the robot may collide with obstacles in the process of moving along the shortest path obtained according to the existing path planning algorithm, especially at a corner position.

## SUMMARY

In one aspect, the present disclosure relates to path planning method, including:

grading a traversable region between a starting point and an end point in a grid map, and determining cost values corresponding to regions of each level;

traversing the traversable region from the starting point based on the cost values of the regions of each level, and determining a plurality of target nodes conforming to a minimum value of a preset function; and

determining a target path of a robot based on the plurality of target nodes.

In some embodiments, grading a traversable region between a starting point and an end point in a grid map, and determining cost values corresponding to regions of each level includes:

detecting an obstacle based on sensors arranged on the robot and generating a grid map;

determining the traversable region between the starting point and the end point in the grid map;

grading the traversable region according to a distance between the traversable region and the obstacle from near to far;

setting corresponding cost values for the regions of each level according to the cost values from large to small corresponding to a distance between the regions of each level and the obstacle from near to far.

In some embodiments, traversing the traversable region from the starting point based on the cost values of the regions of each level, and determining a plurality of target nodes conforming to a minimum value of a preset function includes:

adding the starting point and a point adjacent to the starting point in the traversable region as nodes to be searched to a first list;

traversing the nodes to be searched in the first list, and determining a function value of a heuristic function corresponding to the nodes to be searched based on the cost value of the region where the nodes to be searched are located;

adding a node to be searched with the smallest function value to a second list as a target node until the target nodes in the second list contain the end point, and stopping traversing the nodes to be searched in the first list.

In some embodiments, adding the starting point and a point adjacent to the starting point in the traversable region as nodes to be searched to a first list includes:

using the starting point as a parent node, and using a point adjacent to the starting point as a child node, wherein a pointer is provided on the child node, and the pointer points to the parent node; and

adding the parent node and the child node to the first list as nodes to be searched.

In some embodiments, the method further includes:

judging whether the target node has adjacent points; if there are points adjacent to the target node, taking the target node as a parent node, and taking the adjacent points of the target node as child nodes; and adding the child node to the first list as a node to be searched.

In some embodiments, determining a target path of a robot based on the plurality of target nodes includes:

determining the target path of the robot from the starting point to the end point according to pointers carried by the plurality of target nodes.

In some embodiments, the method further includes:

determining that there is no target path if the first list is empty and the target node in the second list does not contain the end point.

In another aspect, the present disclosure relates to a path planning device, which includes:

a processing module, configured for grading a traversable region between a starting point and an end point in a grid map, and determining cost values corresponding to regions of each level;

a traversal module, configured for traversing the traversable region from the starting point based on the cost values of the regions of each level, and determining a plurality of target nodes conforming to a minimum value of a preset function; and

a determination module, configured for determining a target path of a robot based on the plurality of target nodes.

In yet another aspect, the present disclosure relates to a robot, which includes: a processor and a memory, the processor is configured for executing a path planning program stored in the memory to implement the path planning method according to the present disclosure.

In yet another aspect, the present disclosure relates to a storage medium storing one or more programs, the one or more programs can be executed by one or more processors to implement the path planning method according to the present disclosure.

In the path planning method provided by an embodiment of the invention, grading a traversable region between a starting point and an end point in a grid map, and determining cost values corresponding to regions of each level; traversing the traversable region from the starting point based on the cost values of the regions of each level, and determining a plurality of target nodes conforming to a minimum value of a preset function; and determining a target path of a robot based on the plurality of target nodes, so as to grade the traversable region and set corresponding cost values for regions of each level, using the cost value which represents the distance from obstacles to assist with obtaining a planning path, so as to avoid the robot colliding with obstacles in a moving process, and the optimized path does not increase greatly, thus ensuring the operational efficiency of the robot.

**BRIEF DESCRIPTION OF THE DRAWINGS**

Fig. 1 shows a schematic diagram of a path obtained by using an A* algorithm according to an embodiment of the present disclosure.
Fig. 2 shows a flow diagram of a path planning method provided by an embodiment of the present disclosure.
Fig. 3 shows a schematic diagram of grading traversable region provided by an embodiment of the present disclosure.
Fig. 4 shows a schematic diagram of a path obtained based on grading setting of cost values provided by an embodiment of the present disclosure.
Fig. 5 shows a flow diagram of another path planning method provided by an embodiment of the present disclosure.
Fig. 6 shows a schematic diagram of a parent node and a child node provided by an embodiment of the present disclosure.
Fig. 7 shows a schematic diagram of a path planning provided by an embodiment of the present disclosure.
Fig. 8 shows a structural diagram of a path planning device provided by an embodiment of the present disclosure.
Fig. 9 shows a schematic structural diagram of a robot provided by an embodiment of the present disclosure.

**DETAILED DESCRIPTION**

In order to make the purposes, technical aspects and advantages of the disclosed embodiments clearer, the technical aspects of the disclosed embodiments will be clearly and completely described below in conjunction with the accompanying drawings in the disclosed embodiments, and it will be apparent that the described embodiments are part of, but not all of, the embodiments of the disclosed embodiments. Based on the embodiments in the present disclosure all other embodiments obtained by those of ordinary skill in the art without making creative effort fall within the scope of protection of the present disclosure.

For ease of understanding of the embodiments of the present disclosure a further explanation of specific embodiments will be given below in conjunction with the accompanying drawings which are not to be limiting to the embodiments of the present disclosure.

The path planning method related to the embodiment of the present disclosure is applied to the robot field. The robot constructs a map by a grid method, and the size of the grid granularity may characterize the complexity of the environmental features of the robot (for example, the smaller the grid granularity, the more accurate and complex the environmental features). Each grid is filled by 0 and 1, with 0 indicating passability and 1 indicating obstacles.

Fig. 1 shows a schematic diagram of a path obtained by using an A* algorithm according to an embodiment of the present disclosure. Calculation is performed in turn from an initial state to a target state by using the A* algorithm, to obtain the shortest path from the initial state to the target state, and the following formula is adopted:

$$f(n) = g(n) + h(n)$$

f(n) is an estimated value of a distance of the initial state from a state n to the target state, g(n) is an actual value of a distance from the initial state to the state n in a state space, and h(n) is an estimated value of a distance of the best path from the state n to the target state.

The path obtained by using the A* algorithm is a black line between S (starting point) and G (ending point). Although the shortest path can be obtained by using the A* algorithm directly, there may be cases that a robot collides with obstacles at corners (A, B, C and D).

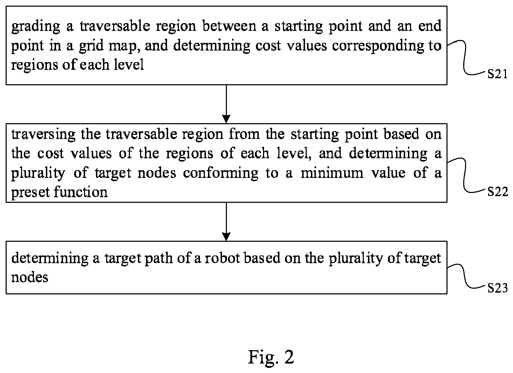

Therefore, an embodiment of the present disclosure provides a path planning method to solve the problem that a robot at a corner collides with obstacles. Fig. 2 shows a flow diagram of the path planning method provided by an embodiment of the present disclosure, as shown in Fig. 2, the method includes:

> S21, grading a traversable region between a starting point and an end point in a grid map, and determining cost values corresponding to regions of each level;
> S22, traversing the traversable region from the starting point based on the cost values of the regions of each level, and determining a plurality of target nodes conforming to a minimum value of a preset function; and
> S23, determining a target path of a robot based on the plurality of target nodes.

In some embodiments, a robot uses sensors (for example, lidar) to detect obstacles around the robot, establishes a grid map, and marks traversable region and obstacles in the grid map. The robot determines a current position (i.e., the starting point) through a positioning module, and then obtains traversable region from the starting point to the end point.

According to a preset rule, the traversable region is graded, and then a traversable region composed of multi-level regions is obtained. The regions of each level are of the same width. The width of regions of each level and the grid granularity can be set to be the same or different, and corresponding cost values are set for regions of each level. The cost values may represent the distance from obstacles, that is, the farther the region from obstacles, the smaller its corresponding cost value.

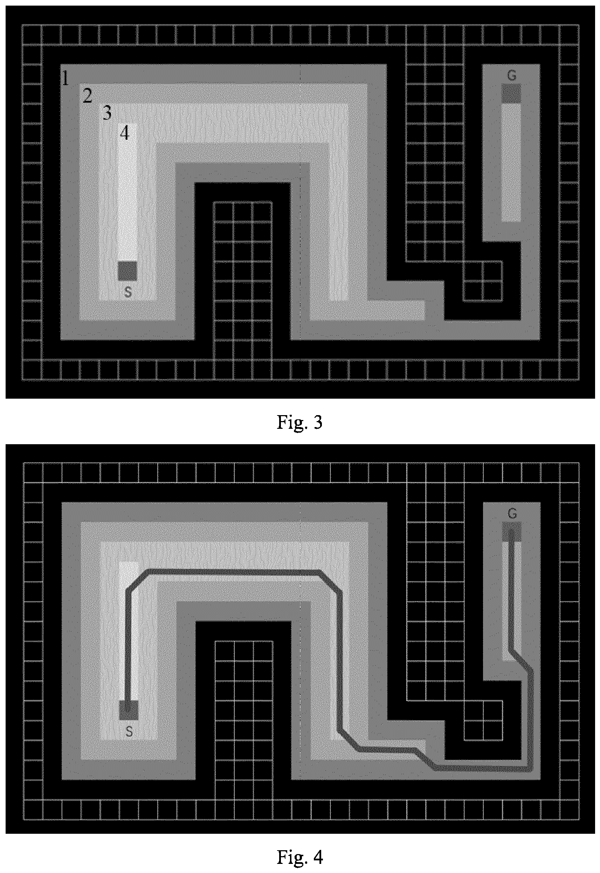

A schematic diagram of grading traversable region provided by an embodiment of the present disclosure is shown with reference to Fig. 3. As shown in Fig. 3, the traversable region is divided into four levels of region. The width of each level of region is the same as the granularity of the grid, and the cost value corresponding to each level of region may include: regions of level 1 correspond to a cost value of 150, regions of level 2 correspond to a cost value of 100, regions of level 3 correspond to a cost value of 50, regions of level 4 correspond to a cost value of 0.

It should be noted that the number of levels of the traversable regions being divided into and the specific data of the cost value corresponding to regions of each level can be set according to the actual situation, which is not specifically limited in this embodiment is.

In some embodiments, an A* algorithm is used to traverse the traversable region from a starting point. In the traversal process, the cost values corresponding to regions of each level are added to the function value of a preset function corresponding to a calculated node, and the node with the smallest function value is taken as the target node.

In some embodiments, determining a node with the smallest function value includes: taking a certain node and eight adjacent nodes as a group to perform a function calculation, and determining a node with the smallest function value among the eight adjacent nodes as the target node, and then performing function calculation again with eight adjacent nodes of the target node, thereby determining a plurality of target nodes that meet the minimum value of the preset function in the traversable region.

In some embodiments, running through some or all of the plurality of target nodes from the starting point to an end point, to form the target path of the robot. There may be a part of the target nodes being the target path. For example, there are two target nodes with the smallest function value in eight adjacent nodes of a certain node, and one target node (path burr) can be excluded according to the directivity from the starting point to the end point.

Referring to Fig. 4, a schematic diagram of a path obtained based on grading setting of cost values provided by an embodiment of the present disclosure is shown. Comparing the path shown in Fig. 4 with the path shown in Fig. 1, the path obtained based on grading setting of cost values is optimized at corners of an obstacle (for example, A, B, C and D), to make the robot's path far away from obstacles, so as to avoid the robot colliding with obstacles in a moving process.

In the path planning method provided by an embodiment of the invention, grading a traversable region between a starting point and an end point in a grid map, and determining cost values corresponding to regions of each level; traversing the traversable region from the starting point based on the cost values of the regions of each level, and determining a plurality of target nodes conforming to a minimum value of a preset function; and

determining a target path of a robot based on the plurality of target nodes, so as to grade the traversable region and set corresponding cost values for regions of each level, using the cost value which represents the distance from obstacles to assist with obtaining a planning path, so as to avoid the robot colliding with obstacles in a moving process, and the optimized path does not increase greatly, thus ensuring the operational efficiency of the robot.

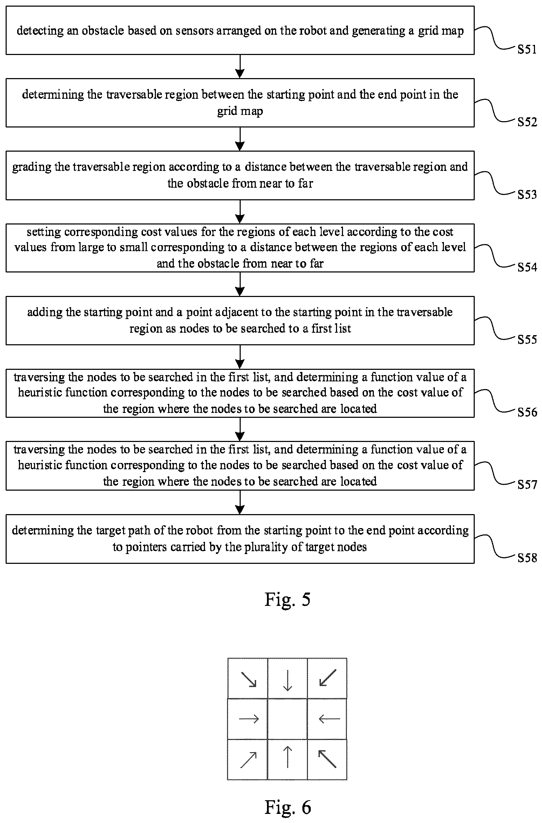

Fig. 5 shows a flow diagram of another path planning method provided by an embodiment of the present disclosure. As shown in Fig. 5, the method includes:

S51, detecting an obstacle based on sensors arranged on the robot and generating a grid map;
S52, determining the traversable region between the starting point and the end point in the grid map;
S53, grading the traversable region according to a distance between the traversable region and the obstacle from near to far;
S54, setting corresponding cost values for the regions of each level according to the cost values from large to small corresponding to a distance between the regions of each level and the obstacle from near to far;
S55, adding the starting point and a point adjacent to the starting point in the traversable region as nodes to be searched to a first list;
S56, traversing the nodes to be searched in the first list, and determining a function value of a heuristic function corresponding to the nodes to be searched based on the cost value of the region where the nodes to be searched are located;
S57, adding a node to be searched with the smallest function value to a second list as a target node until the target nodes in the second list contain the end point, and stopping traversing the nodes to be searched in the first list; and
S58, determining the target path of the robot from the starting point to the end point according to pointers carried by the plurality of target nodes.

In some embodiments, a robot employs sensors (for example, lidar) to detect obstacles around the robot, and creates a 2D grid map and mark the traversable region and obstacles in the grid map.

In some embodiments, the robot determines the current position through the positioning module set by itself, maps the current position to the 2D grid map, and takes the current position as the starting point of the robot. The robot receives information of the end point sent by an external device, and maps the corresponding end point to the 2D grid map based on the information of the end point. The region surrounded by the starting point, the obstacle and end point is taken as a traversable region.

A schematic diagram of grading traversable region provided by an embodiment of the present disclosure is shown with reference to Fig. 3. As shown in Fig. 3, the traversable region is divided into four levels of region. The width of each level of region is the same as the granularity of the grid, and the cost value corresponding to each level of region may include: regions of level 1 correspond to a cost value of 150, regions of level 2 correspond to a cost value of 100, regions of level 3 correspond to a cost value of 50, regions of level 4 correspond to a cost value of 0.

The embodiment of the present disclosure optimizes the A* algorithm and assists in traversing the traversable region with a first list and a second list. The first list can be an open list for placing nodes to be searched, and the second list can be a closed list.

In some embodiments, the heuristic function corresponding to the A* algorithm may be:

$$f(n) = g(n) + h(n)$$

g(n) represents a cost of moving between the current node and the starting point, and h(n) represents a cost of moving between the current node and the end point.

In some embodiments, the starting point is used as a parent node, and a point adjacent to the starting point is used as a child node, wherein a pointer is provided on the child node, and the pointer points to the parent node; and the parent node and the child node are added to the first list as nodes to be searched.

A schematic diagram of a parent node and a child node provided by an embodiment of the present disclosure is shown with reference to Fig. 6. As shown in Fig. 6, the parent node is surrounded by eight child nodes, each child node carries a pointer, and the pointers all point to the parent node.

In some embodiments, in a process of traversing nodes in the first list, a parent node plus eight child nodes may be used as a group of nodes to be searched for calculation, using a node to be searched with a small function value among the nine nodes as a target node, and adding the target node to the second list.

If the target node contains an end point, it is determined that the path search from the starting point to the end point has been completed, and the traversal of the node to be searched in the first list is stopped.

If the target node does not contain the end point, judging whether the target node has adjacent points; if there are points adjacent to the target node, the target node is taken as a parent node, and the adjacent points of the target node are taken as child nodes; and the child node is added to the first list as a node to be searched, and the traversal continues.

If the first list is empty and the target node in the second list does not contain the end point, it is determined that there is no target path.

In some embodiments, a target path of the robot is formed from a starting point through some or all of a plurality of target nodes to an end point according to the direction of a pointer on a plurality of target nodes in a second list.

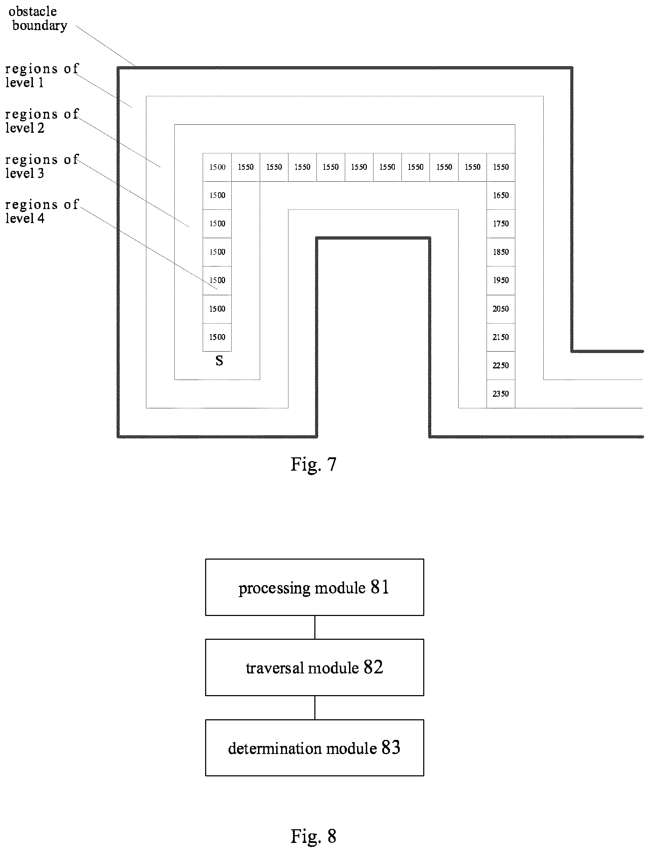

A path planning schematic provided by an embodiment of the present disclosure is shown with reference to Fig. 7, As shown in Fig. 7, a black bold line is an obstacle boundary, and the traversable region is divided into four levels of regions according to the distance from obstacles. Regions of level 1 correspond to a cost value of 150, regions of level 2 correspond to a cost value of 100, regions of level 3 correspond to a cost value of 50, regions of level 4 correspond to a cost value of 0.

The starting point S falls into a region of level 4. Let g=0 and h=1500 +0 corresponding to the starting point. Go up along regions of level 4 from the starting point S, and add 50 to g and subtract 50 from h going through each grid. Therefore, the minimum cost value corresponding to f is 1500. If the starting point S does not go up, left or right directly at this time, it will move from regions of level 4 area to regions of level 3 at this time, and the corresponding cost value will increase by 50. Therefore, it can only go up within the regions of level 4 according to the minimum value of f.

In the path planning method provided by an embodiment of the invention, grading a traversable region between a starting point and an end point in a grid map, and determining cost values corresponding to regions of each level; traversing the traversable region from the starting point based on the cost values of the regions of each level, and determining a plurality of target nodes conforming to a minimum value of a preset function; and determining a target path of a robot based on the plurality of target nodes, so as to grade the traversable region and set corresponding cost values for regions of each level, using the cost value which represents the distance from obstacles to assist with obtaining a planning path, so as to avoid the robot colliding with obstacles in a moving process, and the optimized path does not increase greatly, thus ensuring the operational efficiency of the robot.

Fig. 8 shows a schematic structural diagram of a path planning device provided by an embodiment of the present disclosure. As shown in Fig. 8, the structure includes:

a processing module 81, configured for grading a traversable region between a starting point and an end point in a grid map, and determining cost values corresponding to regions of each level;
a traversal module 82, configured for traversing the traversable region from the starting point based on the cost values of the regions of each level, and determining a plurality of target nodes conforming to a minimum value of a preset function; and
a determination module 83, configured for determining a target path of a robot based on the plurality of target nodes.

In some embodiments, the processing module 81 is configured for detecting an obstacle based on sensors arranged on the robot and generating a grid map; determining the traversable region between the starting point and the end point in the grid map; grading the traversable region according to a distance between the traversable region and the obstacle from near to far; setting corresponding cost values for the regions of each level according to the cost values from large to small corresponding to a distance between the regions of each level and the obstacle from near to far.

In some embodiments, the traversal module 82 is configured for adding the starting point and a point adjacent to the starting point in the traversable region as nodes to be searched to a first list; traversing the nodes to be searched in the first list, and determining a function value of a heuristic function corresponding to the nodes to be searched based on the cost value of the region where the nodes to be searched are located; adding a node to be searched with the smallest function value to a second list as a target node until the target nodes in the second list contain the end point, and stopping traversing the nodes to be searched in the first list.

In some embodiments, the traversal module 82 is configured for using the starting point as a parent node, and using a point adjacent to the starting point as a child node, wherein a pointer is provided on the child node, and the pointer points to the parent node; and adding the parent node and the child node to the first list as nodes to be searched.

In some embodiments, the traversal module 82 is further configured for judging whether the target node has adjacent points; if there are points adjacent to the target node, taking the target node as a parent node, and taking the adjacent points of the target node as child nodes; and adding the child node to the first list as a node to be searched.

In some embodiments, determining a target path of a robot based on the plurality of target nodes includes:
determining the target path of the robot from the starting point to the end point according to pointers carried by the plurality of target nodes.

In some embodiments, the traversal module 82 is further configured for determining that there is no target path if the first list is empty and the target node in the second list does not contain the end point.

The path planning device provided in this embodiment may be the path planning device shown in Fig. 8, which may execute the path planning method shown in Fig. 2 and Fig. 7, thereby realizing the technical effect of the path planning method shown in Fig. 2 and Fig. 7. Please refer to related description in Fig. 2 and Fig. 7, which will not be described here for concise description.

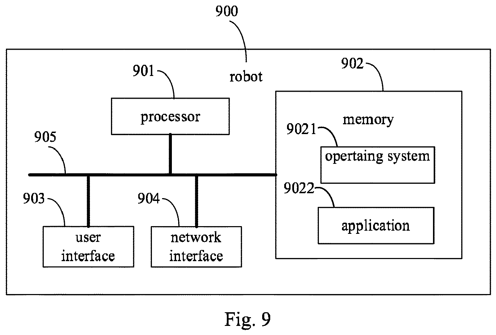

Fig. 9 shows a schematic structural diagram of a robot provided by an embodiment of the present disclosure. The robot 900 shown in Fig. 9 includes at least one processor 901, a memory 902, at least one network interface 904, and other user interfaces 903. The various components in the robot 900 are coupled together by a bus system 905. The bus system 905 is used to implement connection and communication between these components. The bus system 905 includes a power bus, a control bus and a status signal bus in addition to a data bus. However, for clarity various bus is denoted as the bus system 905 in Fig. 9.

In some embodiments the user interface 903 may include a display, a keyboard or a click device (e.g., a mouse, a trackball, a touch pad or a touch screen and the like).

The memory 902 in embodiments of the present disclosure may be volatile memory or non-volatile memory or may include both volatile and non-volatile memory. The nonvolatile memory may be Read-Only Memory (ROM), Programmable ROM (PROM), Erasable PROM (EPROM), Electrically Erasable EPROM (EEPROM), or flash memory. The volatile memory may be a Random Access Memory (RAM) which serves as an external cache. By way of illustration but not limitation, many forms of RAM are available, such as Static RAM (SRAM), Dynamic RAM (DRAM), Synchronous DRAM (SDRAM), Double Data Rate SDRAM (DDRSDRAM), Enhanced SDRAM (ESDRAM), Synch Link DRAM (SLDRAM), and Direct Rambus RAM (DRRAM). The memory 902 described herein is intended to include but not limited to these and any other suitable types of memory.

In some embodiments, the memory 902 stores elements executable units or data structures, or a subset of them, or an extended set of them: an operating system 9021 and an application 9022.

In some embodiments the operating system 9021 includes various system programs such as a framework layer a core library layer a driver layer and the like for implementing various basic services and handling hardware-based tasks. The application 9022 includes various applications such as Media Player, Browser and the like and is used for implementing various application services. A program implementing the method of the disclosed embodiments may be included in the application 9022.

In some embodiments, the processor 901 is configured for executing the method provided by the present disclosure by invoking programs or instructions stored in the memory 902, which may be programs or instructions stored in the application 9022, the method includes:

grading a traversable region between a starting point and an end point in a grid map, and determining cost values corresponding to regions of each level; traversing the traversable region from the starting point based on the cost values of the regions of each level, and determining a plurality of target nodes conforming to a minimum value of a preset function; and determining a target path of a robot based on the plurality of target nodes.

In some embodiments, the method further includes: detecting an obstacle based on sensors arranged on the robot and generating a grid map; determining the traversable region between the starting point and the end point in the grid map; grading the traversable region according to a distance between the traversable region and the obstacle from near to far; setting corresponding cost values for the regions of each level according to the cost values from large to small corresponding to a distance between the regions of each level and the obstacle from near to far.

In some embodiments, the method further includes: adding the starting point and a point adjacent to the starting point in the traversable region as nodes to be searched to a first list; traversing the nodes to be searched in the first list, and determining a function value of a heuristic function corresponding to the nodes to be searched based on the cost value of the region where the nodes to be searched are located; adding a node to be searched with the smallest function value to a second list as a target node until the target nodes in the second list contain the end point, and stopping traversing the nodes to be searched in the first list.

In some embodiments, the method further includes: using the starting point as a parent node, and using a point adjacent to the starting point as a child node, wherein a pointer is provided on the child node, and the pointer points to the parent node; and adding the parent node and the child node to the first list as nodes to be searched.

In some embodiments, the method further includes: judging whether the target node has adjacent points; if there are points adjacent to the target node, taking the target node as a parent node, and taking the adjacent points of the target node as child nodes; and adding the child node to the first list as a node to be searched.

In some embodiments, the method further includes: determining the target path of the robot from the starting point to the end point according to pointers carried by the plurality of target nodes.

In some embodiments, the method further includes: determining that there is no target path if the first list is empty and the target node in the second list does not contain the end point.

The methods disclosed in the above-described embodiments of the present disclosure may be applied to or implemented by the processor 901. The processor 901 may be an integrated circuit chip having signal processing capability. In implementation the steps of the above method may be accomplished by integrated logic circuitry of hardware in processor 901 or by instructions in the form of software. The processor 901 described above may be a general purpose processor, a Digital Signal Processor (DSP), an Application Specific Integrated Circuit (ASIC), a Field Programmable Gate Array (FPGA), or another programmable logic device, a discrete gate or transistor logic device, or a discrete hardware component. The disclosed methods, steps, and logic block diagrams in the disclosed embodiments may be implemented or performed. The general purpose processor may be a microprocessor or the processor may be any conventional processor or the like. The steps of the method disclosed in combination with the embodiment of the present disclosure can be directly embodied as the completion of the execution of the hardware decoding processor or the completion of the combined execution of the hardware and software units in the decoding processor. The software unit may be located in a storage medium mature in the art such as random access memory, flash memory, read only memory, programmable read only memory, electrically erasable programmable memory, registers, etc. The storage medium is located in the memory 902, and the processor 901 reads the information in the memory 902 and completes the steps of the above method in combination with its hardware.

It will be appreciated that the embodiments described herein may be implemented in hardware software firmware middleware microcode or a combination thereof. For hardware implementation, the processing unit may be implemented in one or more Application Specific Integrated Circuits (ASIC), Digital Signal Processor (DSP), Digital Signal Processing Device (DSPD), Programmable Logic Device (PLD), Field-Programmable Gate Array (FPGA), general purpose processor, controller, microcontroller, microprocessor, other electronic units for performing the functions described in the present disclosure, or a combination thereof.

For software implementations the techniques described herein may be implemented by units that perform the functions described herein. The software codes may be stored in memory and executed by a processor. The memory can be implemented in the processor or outside the processor.

The robot provided in this embodiment may be the robot shown in Fig. 9, which may execute the path planning method shown in Fig. 2 and Fig. 7, thereby realizing the technical effect of the path planning method shown in Fig. 2 and Fig. 7. Please refer to the related description in Fig. 2 and Fig. 7 for details, and will not be described here for concise description.

Embodiments of the present disclosure also provide a storage medium (computer readable storage medium). The storage medium here stores one or more programs. The storage medium may include volatile memory such as random access memory. The memory may also include non-volatile memory such as read-only memory, flash memory hard disk or solid-state disk; The memory may also include a combination of the above-mentioned kinds of memories.

When one or more programs in the storage medium can be executed by one or more processors, the path planning method executed at the path planning device side described above is implemented.

The processor is configured to execute a path planning program stored in a memory to implement the following path planning method executed at a path planning device side, which includes:

grading a traversable region between a starting point and an end point in a grid map, and determining cost values corresponding to regions of each level; traversing the traversable region from the starting point based on the cost values of the regions of each level, and determining a plurality of target nodes conforming to a minimum value of a preset function; and determining a target path of a robot based on the plurality of target nodes.

In some embodiments, the method further includes: detecting an obstacle based on sensors arranged on the robot and generating a grid map; determining the traversable region between the starting point and the end point in the grid map; grading the traversable region according to a distance between the traversable region and the obstacle from near to far; setting corresponding cost values for the regions of each level according to the cost values from large to small corresponding to a distance between the regions of each level and the obstacle from near to far.

In some embodiments, the method further includes: adding the starting point and a point adjacent to the starting point in the traversable region as nodes to be searched to a first list; traversing the nodes to be searched in the first list, and determining a function value of a heuristic function corresponding to the nodes to be searched based on the cost value of the region where the nodes to be searched are located; adding a node to be searched with the smallest function value to a second list as a target node until the target nodes in the second list contain the end point, and stopping traversing the nodes to be searched in the first list.

In some embodiments, the method further includes: using the starting point as a parent node, and using a point adjacent to the starting point as a child node, wherein a pointer is provided on the child node, and the pointer points to the parent node; and adding the parent node and the child node to the first list as nodes to be searched.

In some embodiments, the method further includes: judging whether the target node has adjacent points; if there are points adjacent to the target node, taking the target node as a parent node, and taking the adjacent points of the target node as child nodes; and adding the child node to the first list as a node to be searched.

In some embodiments, the method further includes: determining the target path of the robot from the starting point to the end point according to pointers carried by the plurality of target nodes.

In some embodiments, the method further includes: determining that there is no target path if the first list is empty and the target node in the second list does not contain the end point.

Those skilled in the art should be able to further realize that, elements and algorithmic steps of each example described in connection with the embodiments disclosed herein can be implemented in electronic hardware, computer software, or a combination of both, and the composition and steps of each example have been described functionally generally in the above description in order to clearly illustrate the interchangeability of hardware and software. Whether these functions are performed in hardware or software depends on the specific application and design constraints of the technical scheme. Those skilled in the art may use different methods for each particular application to implement the described functionality but such implementation should not be considered beyond the scope of the present disclosure.

The steps of the method or algorithm described in connection with the embodiments disclosed herein may be implemented in hardware, a software module executed by a processor, or a combination of both. The software module may be placed in random access memory (RAM), memory, read only memory (ROM), electrically programmable ROM, electrically erasable programmable ROM, registers, hard disk, removable disk, CD-ROM, or any other form of storage medium known in the art.

In the specific embodiments described above, detailed description is further made on the purpose, technical scheme and beneficial effects of the present disclosure. It shall be understood that the foregoing is only a specific embodiment of the present disclosure and is not intended to limit the scope of protection of the present disclosure. Any modifications, equivalents, modifications, etc. made within the spirit and principles of the present disclosure shall be included within the scope of protection of the present disclosure.

**Claims**

1.   A path planning method, comprising:

grading a traversable region between a starting point and an end point in a grid map into levels, and determining cost values corresponding to regions of each level;
traversing the traversable region from the starting point based on the cost values of the regions of each level, and determining a plurality of target nodes conforming to a minimum value of a preset function; and
determining a target path of a robot based on the plurality of target nodes.

2.   The method of claim 1, wherein grading a traversable region between a starting point and an end point in a grid map, and determining cost values corresponding to regions of each level comprises:

detecting an obstacle based on sensors arranged on the robot and generating a grid map;
determining the traversable region between the starting point and the end point in the grid map;
grading the traversable region according to a distance between the traversable region and the obstacle from near to far; and
setting corresponding cost values for the regions of each level according to the cost values from large to small corresponding to a distance between the regions of each level and the obstacle from near to far.

3.   The method of claim 2, wherein traversing the traversable region from the starting point based on the cost values of the regions of each level, and determining a plurality of target nodes conforming to a minimum value of a preset function comprises:

adding the starting point and a point adjacent to the starting point in the traversable region as nodes to be searched to a first list;
traversing the nodes to be searched in the first list, and determining a function value of a heuristic function corresponding to the nodes to be searched based on the cost value of the region where the nodes to be searched are located; and
adding a node to be searched with the smallest function value to a second list as a target node until the target nodes in the second list contain the end point, and stopping traversing the nodes to be searched in the first list.

4.   The method of claim 3, wherein adding the starting point and a point adjacent to the starting point in the traversable region as nodes to be searched to a first list comprises:

using the starting point as a parent node, and using a point adjacent to the starting point as a child node, wherein a pointer is provided on the child node, and the pointer points to the parent node; and
adding the parent node and the child node to the first list as nodes to be searched.

5.   The method of claim 3 or 4, further comprising:

judging whether the target node has adjacent points;
if there are points adjacent to the target node, taking the target node as a parent node, and taking the adjacent points of the target node as child nodes; and
adding the child node to the first list as a node to be searched.

6.   The method of claim 5, wherein determining a target path of a robot based on the plurality of target nodes comprises:
determining the target path of the robot from the starting point to the end point according to pointers carried by the plurality of target nodes.

7. The method of claim 6, further comprising: determining that there is no target path if the first list is empty and the target node in the second list does not contain the end point.

8. A path planning device, comprising:

a processing module, configured for grading a traversable region between a starting point and an end point in a grid map, and determining cost values corresponding to regions of each level;
a traversal module, configured for traversing the traversable region from the starting point based on the cost values of the regions of each level, and determining a plurality of target nodes conforming to a minimum value of a preset function; and
a determination module, configured for determining a target path of a robot based on the plurality of target nodes.

9. A robot, comprising: a processor and a memory, wherein the processor is configured for executing a path planning program stored in the memory to implement the path planning method according to any one of claims 1 to 7.

10. A storage medium, storing one or more programs, wherein the one or more programs, when executed by one or more processors, implement the path planning method according to any one of claims 1 to 7.

grading a traversable region between a starting point and an end point in a grid map, and determining cost values corresponding to regions of each level ⟩⟨ S21

traversing the traversable region from the starting point based on the cost values of the regions of each level, and determining a plurality of target nodes conforming to a minimum value of a preset function ⟩⟨ S22

determining a target path of a robot based on the plurality of target nodes ⟩⟨ S23

Fig. 2

Fig. 3

Fig. 4

detecting an obstacle based on sensors arranged on the robot and generating a grid map — S51

determining the traversable region between the starting point and the end point in the grid map — S52

grading the traversable region according to a distance between the traversable region and the obstacle from near to far — S53

setting corresponding cost values for the regions of each level according to the cost values from large to small corresponding to a distance between the regions of each level and the obstacle from near to far — S54

adding the starting point and a point adjacent to the starting point in the traversable region as nodes to be searched to a first list — S55

traversing the nodes to be searched in the first list, and determining a function value of a heuristic function corresponding to the nodes to be searched based on the cost value of the region where the nodes to be searched are located — S56

traversing the nodes to be searched in the first list, and determining a function value of a heuristic function corresponding to the nodes to be searched based on the cost value of the region where the nodes to be searched are located — S57

determining the target path of the robot from the starting point to the end point according to pointers carried by the plurality of target nodes — S58

Fig. 5

Fig. 6

obstacle
boundary

regions of
level 1

regions of
level 2

regions of
level 3

regions of
level 4

| 1500 | 1550 | 1550 | 1550 | 1550 | 1550 | 1550 | 1550 | 1550 | 1550 | 1550 |
|------|------|------|------|------|------|------|------|------|------|------|
| 1500 |      |      |      |      |      |      |      |      |      | 1650 |
| 1500 |      |      |      |      |      |      |      |      |      | 1750 |
| 1500 |      |      |      |      |      |      |      |      |      | 1850 |
| 1500 |      |      |      |      |      |      |      |      |      | 1950 |
| 1500 |      |      |      |      |      |      |      |      |      | 2050 |
| 1500 |      |      |      |      |      |      |      |      |      | 2150 |
|      |      |      |      |      |      |      |      |      |      | 2250 |
|      |      |      |      |      |      |      |      |      |      | 2350 |

S

Fig. 7

| processing module 81 |
|---|
| traversal module 82 |
| determination module 83 |

Fig. 8

900

901

robot

902

processor

905

memory

9021

opertaing system

903

904

9022

user
interface

network
interface

application

Fig. 9

## INTERNATIONAL SEARCH REPORT

| International application No. |
|---|
| **PCT/CN2021/101206** |

### A. CLASSIFICATION OF SUBJECT MATTER

G05D 1/02(2020.01)i; G01C 21/34(2006.01)i; G01C 21/20(2006.01)i

According to International Patent Classification (IPC) or to both national classification and IPC

### B. FIELDS SEARCHED

Minimum documentation searched (classification system followed by classification symbols)

G05D; G01C

Documentation searched other than minimum documentation to the extent that such documents are included in the fields searched

Electronic data base consulted during the international search (name of data base and, where practicable, search terms used)

CNABS; CNTXT; CNKI; VEN: 分级, 区域, 障碍, 距离, 代价, 最小, 栅格, 起点, 终点, 目标, 可通行, region, area, obstacle, grid, cost, minimum , distance, target

### C. DOCUMENTS CONSIDERED TO BE RELEVANT

| Category* | Citation of document, with indication, where appropriate, of the relevant passages | Relevant to claim No. |
|---|---|---|
| PX | CN 111781925 A (BEIJING HAIYI TONGZHAN INFORMATION TECHNOLOGY CO., LTD.) 16 October 2020 (2020-10-16) <br> claims 1-10 | 1-10 |
| PX | CN 111399516 A (SHENZHEN SILVER STAR INTELLIGENT TECHNOLOGY CO., LTD.) 10 July 2020 (2020-07-10) <br> description paragraphs 0057-0139, figures 1a-6 | 1-10 |
| X | CN 108241369 A (BEIJING HARIBIT INTELLIGENT TECHNOLOGY CO., LTD.) 03 July 2018 (2018-07-03) <br> description, paragraphs 0063-0112, figures 1-2 | 1-10 |
| X | CN 110595482 A (SHENZHEN SILVER STAR INTELLIGENT TECHNOLOGY CO., LTD.) 20 December 2019 (2019-12-20) <br> description, paragraphs 0100-0230, figures 1-7 | 1-10 |
| A | CN 109709945 A (UBTECH ROBOTICS CORP.) 03 May 2019 (2019-05-03) <br> entire document | 1-10 |
| A | CN 105955262 A (HARBIN UNIVERSITY OF SCIENCE AND TECHNOLOGY) 21 September 2016 (2016-09-21) <br> entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 September 2021** | **24 September 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/101206**

### C.    DOCUMENTS CONSIDERED TO BE RELEVANT

| Category* | Citation of document, with indication, where appropriate, of the relevant passages | Relevant to claim No. |
|---|---|---|
| A | JP 2018185633 A (TOYOTA MOTOR CORP.) 22 November 2018 (2018-11-22)<br>entire document | 1-10 |
| A | WO 2020100595 A1 (SONY CORP.) 22 May 2020 (2020-05-22)<br>entire document | 1-10 |

Form PCT/ISA/210 (second sheet) (January 2015)

INTERNATIONAL SEARCH REPORT
Information on patent family members

International application No.

**PCT/CN2021/101206**

| Patent document cited in search report | | | Publication date (day/month/year) | Patent family member(s) | | | Publication date (day/month/year) |
|---|---|---|---|---|---|---|---|
| CN | 111781925 | A | 16 October 2020 | None | | | |
| CN | 111399516 | A | 10 July 2020 | CN | 111399516 | B | 02 July 2021 |
| CN | 108241369 | A | 03 July 2018 | None | | | |
| CN | 110595482 | A | 20 December 2019 | CN | 110595482 | B | 13 November 2020 |
| CN | 109709945 | A | 03 May 2019 | None | | | |
| CN | 105955262 | A | 21 September 2016 | None | | | |
| JP | 2018185633 | A | 22 November 2018 | None | | | |
| WO | 2020100595 | A1 | 22 May 2020 | JP | 2020079997 | A | 28 May 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010577991